Europäisches Patentamt

(19) European Patent Office

Office européen des brevets

(11) Publication number : **0 557 124 A1**

# (12) EUROPEAN PATENT APPLICATION

(21) Application number : 93301237.9

(22) Date of filing : 19.02.93

(51) Int. Cl.$^5$ : **C08L 53/00**, C08L 51/06, // (C08L53/00, 23:08)

(30) Priority : 21.02.92 JP 35098/92

(43) Date of publication of application :
25.08.93 Bulletin 93/34

(84) Designated Contracting States :
DE FR GB IT NL

(71) Applicant : **MITSUBISHI PETROCHEMICAL CO., LTD.**
5-2, 2-chome, Marunouchi
Chiyoda-ku Tokyo 100 (JP)

(71) Applicant : **TOYOTA JIDOSHA KABUSHIKI KAISHA**
1, Toyota-cho Toyota-shi
Aichi-ken (JP)

(72) Inventor : **Nishio, Takeyoshi**
55-39 Kamiohbari, Hosokawa-Cho
Okazaki-Shi, Aichi-ken (JP)

Inventor : **Nomura, Takao**
114-169 Sakanose, Kosema-Cho
Toyota-shi, Aichi-ken (JP)
Inventor : **Sato, Hiroki, c/o Mitsubishi Petrochem. Co. Ltd.**
Yokkaichi Sogo Kenkyusho,1, Toho-Cho
Yokkaichi-Shi, Mie-ken (JP)
Inventor : **Tsutsumi, Ikuo, c/o Mitsubishi Petrochem. Co. Ltd.**
Yokkaichi Sogo Kenkyusho,1, Toho-Cho
Yokkaichi-Shi, Mie-ken (JP)
Inventor : **Sakurai, Hideo, c/o Mitsubishi Petrochem. Co. Ltd.**
Yokkaichi Sogo Kenkyusho,1, Toho-Cho
Yokkaichi-Shi, Mie-ken (JP)
Inventor : **Sano, Hironari, c/o Mitsubishi Petrochem. Co. Ltd.**
Yokkaichi Sogo Kenkyusho,1, Toho-Cho
Yokkaichi-Shi, Mie-ken (JP)

(74) Representative : **Kyle, Diana**
Elkington and Fife Prospect House 8
Pembroke Road
Sevenoaks, Kent TN13 1XR (GB)

(54) Thermoplastic polymer compositions.

(57)    A thermoplastic polymer composition comprising :
    (i) 100 parts by weight of a thermoplastic polymer component consisting of 55 to 75% by weight of an ethylene-propylene block copolymer having a melt flow rate of 30 to 150 g/10 min (as measured at 230°C under a load of 2.16 Kg), including a propylene homopolymer moiety having a melt flow rate of 50 to 300 g/10 min and an isotactic pentad fraction (P) of 0.98 or higher and 25 to 45% by weight of an ethylene copolymer having a melting point of 30 to 100°C, and
    (ii) 1 to 25 parts by weight of talc having an average particle size of 5 μm or less and a specific surface area of 3.5 m$^2$/g or larger,
    the composition including a propylene homopolymer domain having an average lamella thickness of 8 nm or more, as observed under an electron microscope along the normal direction of the plane (100) or (010).

EP 0 557 124 A1

## BACKGROUND OF THE INVENTION

### Field of the Invention

This invention relates to a specific thermoplastic polymer composition which comprises an ethylene-propylene block copolymer, an ethylene copolymer and talc, shows good processability on injection molding, can give a molded product having a good appearance, is excellent in flexural modulus and surface hardness, and thus is suited for the production of injection-molded products such as automotive parts.

### Background Art

Heretofore, many attempts have been made to improve the impact resistance and rigidity of polypropylene by incorporating therein various types of rubbers such as an ethylene-propylene copolymer rubber and talc. For instance, a polypropylene composition excellent in low-temperature impact resistance is disclosed in Japanese Patent Publication No. 60-3420. Further, Japanese Patent Publications Nos. 59-49252 and 63-65223 and Japanese Patent Laid-Open Publication No. 61-276840 disclose polypropylene compositions in which an additional polyethylene is incorporated to improve such appearance qualities as gloss and flow marks, coating properties and dimensional stability.

These publications do not teach the use of an ethylene-propylene block copolymer in which the propylene homopolymer moiety shows a particularly high fluidity and is of high crystallinity. They also do not teach the use of an ethylene-propylene copolymer rubber containing some amount of crystalline segments. The compositions disclosed in the above publications have the drawback of poor processability on molding thin products. Moreover, the compositions are unsatisfactory in the surface hardness and smoothness of molded products. The molded products will be easily flawed due to their low surface hardness and have a poor appearance due to their poor surface smoothness.

Japanese Patent Laid-Open Publication No. 1-204946 discloses a composition comprising an ethylene-propylene copolymer rubber, an ethylene-propylene block copolymer, an ethylene copolymer and talc. In this composition, a polypropylene of particularly high crystallinity is not used as in the case of the above compositions. Further, this composition comprises large amounts of the ethylene-propylene copolymer rubber and the ethylene copolymer and a small amount of talc. This composition is still insufficient in the surface hardness and smoothness of molded products, and is also insufficient in flexural modulus.

Japanese Patent Publication No. 1-33497 discloses a composition of an ethylene-propylene block copolymer of high rigidity to which amorphous ethylene-propylene copolymers of low and high viscosities and talc are added. This composition is insufficient in processability because of the low MFR of the ethylene-propylene block copolymer. Moreover, since the amorphous ethylene-propylene copolymers used do not contain an appreciable amount of crystalline segments and the low-viscosity copolymer is partly used, a part of the amorphous ethylene-propylene copolymers is dissolved in the non-crystalline moiety of the propylene homopolymer. This causes lowering of the overall crystallinity of the composition, resulting in the low surface hardness and poor surface smoothness of molded products.

Moreover, Japanese Patent Laid-Open Publication No. 64-66263 teaches a composition that uses an ethylene-propylene block copolymer of high rigidity together with an amorphous ethylene-propylene copolymer and a low crystalline ethylene-butene copolymer. There is no teaching in this publication as to the lamella thickness in the propylene homopolymer moiety. This composition will not provide a molded product having a satisfactory surface smoothness.

Problems with such conventional thermoplastic polymer compositions as mentioned above are that because of their slow crystallization rate, much cooling time is needed when large-sized molded products are produced by means of injection molding, whereby the productivity is very low; because of their low flexural modulus, the molded products are poor in shape retention, meaning that the compositions are not suited for the production of thin moldings; and because of their low surface hardness, they provide moldings that are vulnerable.

It is therefore a primary object of the invention to solve the above problems in the prior art and provide a thermoplastic polymer composition which shows good processability on injection molding and can give molded products having good appearance, high rigidity and high surface hardness.

## SUMMARY OF THE INVENTION

It has now been found that the above object can be achieved by blending a specific ethylene-propylene block copolymer of high crystallinity and high fluidity, a specific ethylene copolymer having in the molecule a

2

proper amount of crystalline segments, and talc, in a specific proportion.

Thus, the present invention provides a thermoplastic polymer composition comprising (i) 100 parts by weight of a thermoplastic polymer component consisting of 55 to 75% by weight of an ethylene-propylene block copolymer having a melt flow rate (MFR) of 30 to 150 g/10 min (as measured at 230°C under a load of 2.16 Kg), including a propylene homopolymer moiety having an MFR of 50 to 300 g/10 min and an isotactic pentad fraction (P) of 0.98 or higher and 25 to 45% by weight of an ethylene copolymer having a melting point of 30 to 100°C and (ii) 7 to 25 parts by weight of talc having an average particle size of 5 $\mu$m or less and a specific surface area of 3.5 $m^2$/g or larger, said composition including a propylene homopolymer domain having an average lamella thickness of 8 nm or more, as observed under an electron microscope along the normal direction of the plane (100) or (010).

The composition of the present invention shows good processability on injection molding and provides moldings having good appearance and high flexural modulus and surface hardness.

In addition, the composition of the invention, due to the use of an ethylene copolymer having a proper amount of a crystalline segment, provides injection moldings very excellent in surface smoothness. Further, the composition is greatly improved in terms of the rate of solidification by cooling compared to conventional thermoplastic polymer compositions, because the propylene homopolymer moiety of the ethylene-propylene block copolymer is of high crystallinity and the crystalline domain has a large lamella thickness. Even when a short cooling time is applied to injection molding, moldings excellent in surface smoothness can thus be obtained at a considerably reduced production time requirement.

More illustratively, the thermoplastic polymer composition of the invention has a preferable melt flow rate of 10 g/10 min or more and can produce, with good processability, injection-molded products of high rigidity which specifically have a flexural modulus of 10,000 to 20,000 Kg/$cm^2$, a Rockwell hardness of 50 or more, an Izod impact strength of 5 Kg·cm/cm or more at -30°C.

The composition of the present invention, which has the above-described advantageous properties, is suitably utilized for injection-molded automotive parts, especially for large-sized exterior parts which require a good appearance and flaw-resistance, such as bumpers, air dam spoilers and fascia boards.

## DETAILED DESCRIPTION OF THE INVENTION

The ethylene-propylene block copolymer used in the invention has an MFR of 30 to 150 g/10 min, preferably 50 to 100 g/10 min, and includes a propylene homopolymer moiety having an MFR of 50 to 300 g/10 min, preferably 100 to 200 g/10 min and having an isotactic pentad fraction (P) of 0.98 or more, preferably 0.985 or more.

When the MFR of the block copolymer is below 30 g/10 min, the processability of the resulting composition is poor whereby the molded product is likely to have a poor surface smoothness. When the MFR is above 150 g/10 min, on the other hand, the impact strength of the resulting composition will be insufficient. The MFR of the ethylene-propylene block copolymer may be controlled during polymerization, or adjusted with an organic peroxide such as a diacyl peroxide or a dialkyl peroxide after polymerization. The ethylene content of the ethylene-propylene block copolymer is preferably 2 to 8% by weight. At an ethylene content below 2% by weight the resulting composition is likely to have a low impact resistance, and at an ethylene content exceeding 8% by weight the resulting composition is likely to be poor in flexural modulus and surface hardness.

An isotactic pentad fraction (P) below 0.98 is not preferred for the present invention, because the resulting composition becomes insufficient in flexural modulus and provides moldings with some inferior surface smoothness. By the term "isotactic pentad fraction (P)" is herein meant an isotactic fraction in pentad unit of the molecular chain of propylene, as measured with $^{13}$C-NMR.

The ethylene-propylene block copolymer used in the invention may also be a copolymer obtained by (graft or random) copolymerization with up to 10 % by weight of other unsaturated monomer such as maleic anhydride, methacrylic acid or trimethoxyvinylsilane. In particular, the use of an ethylene-propylene block copolymer with maleic anhydride or trimethoxyvinylsilane grafted thereon can improve the surface hardness of the resulting composition.

A stereospecific catalyst is employed for the production of the ethylene-propylene block copolymer. Typical preparation methods of the catalyst are a method as disclosed in Japanese Patent Laid-Open Publication Nos. 56-100806, 56-120712 and 58-104907, in which a titanium trichloride composition prepared by reducing titanium tetrachloride with an organoaluminum compound and then treating with various electron donors and electron acceptors is combined with an organoaluminum compound and an aromatic carboxylic acid ester; and a method as disclosed in Japanese Patent Laid-Open Publication Nos. 57-63310, 63-43915 and 63-83116, in which titanium tetrachloride and various electron donors are brought into contact with a magnesium halide to give a carrier-type catalyst.

The ethylene copolymer used in the invention should preferably be an ethylene-$\alpha$-olefin copolymer. Important for this copolymer is that it includes in the molecule a proper amount of crystalline segment. Accordingly, it should have a melting point of 30 to 100°C, preferably 40 to 80°C, as measured with a differential scanning calorimeter. With an ethylene copolymer having a melting point below 30°C, the resulting composition is unsatisfactory in terms of surface hardness, and provides moldings with an insufficient surface smoothness. An ethylene copolymer having a melting point exceeding 100°C, on the other hand, is not preferred because it provides a composition with a low impact strength. Preferably, the ethylene copolymer has an MFR of 0.4 to 4 g/10 min. An ethylene copolymer with an MFR below 0.4 g/10 min is dispersed in the ethylene-propylene block copolymer with difficulty, while an ethylene copolymer having an MFR exceeding 4 g/10 min comes short of strength as rubber; and thus in either case the resulting composition is like to have a low impact strength. The ethylene copolymer may further comprises up to 15 % by weight of a third component, for example, ethylidene norbornene, dicyclopentadiene or 1,4-hexadiene.

The ethylene copolymer may be prepared by copolymerizing ethylene with e.g. an $\alpha$-olefin in the presence of an ionic polymerization catalyst such as Ziegler, Phillips or Kaminsky catalyst. Production methods applicable to the above copolymerization may be a gas-phase fluidized bed method, a solution or slurry method, or a medium- or high-pressure ionic polymerization in which polymerization is conducted at a pressure of 50 Kg/cm$^2$ or higher and a temperature of 120°C or higher. As long as the melting point of the resulting copolymer falls within the above range, the $\alpha$-olefin content of the copolymer is not particularly limited; however, it is preferably in the range of 15 - 25 % by weight. The $\alpha$-olefin to be copolymerized with ethylene may be a 1-olefin having 3 to 8 carbon atoms. Examples of the 1-olefin include propylene, butene-1, 3-methylbutene-1, pentene-1, 4-methylpentene-1, hexene-1, heptene-1 and octene-1. Among others, particular preference is given to ethylene-propylene and ethylene-butene copolymers in view of a balance among the impact strength, surface hardness and surface smoothness of moldings. The $\alpha$-olefins may be used alone or in combination of two or more in a binary or multi-component copolymer.

The above mentioned two polymer components are used in such a proportion that 55 to 75% by weight, preferably 60 to 70% by weight, of the ethylene-propylene block copolymer is mixed with 25 to 45% by weight, preferably 30 to 40% by weight, of the ethylene copolymer.

In the present invention, the use of the ethylene copolymer in an amount less than 25% by weight or, to put it another way, the use of the ethylene-propylene block copolymer in an amount exceeding 75% by weight provides a composition of low impact strength, while the use of the ethylene copolymer in an amount exceeding 45% by weight provides a composition inferior in both flexural modulus and surface hardness.

The talc usable in the present invention should have an average particle size of 5 $\mu$m or less, preferably from 0.5 to 3 $\mu$m, and a specific surface area of 3.5 m$^2$/g or more, preferably from 3.5 to 6 m$^2$/g. Such talc may be prepared by a dry pulverization and the subsequent dry classification. When the average particle size is in excess of 5 $\mu$m, the resulting composition possesses a low impact strength. The average particle size of talc is a particle size at a cumulative amount of 50% by weight in a cumulative particle size distribution curve obtained by a liquid phase sedimentation light transmission method using, for instance, Model CP manufactured by Shimadzu Corp. The specific surface area can be measured by an air permeation method using, for instance, a specific surface area measuring apparatus Model SS-100 manufactured by Shimadzu Corp.

The talc is used in an amount of 7 to 25 parts by weight, preferably 10 to 20 parts by weight, per 100 parts by weight of the total amount of the ethylene-propylene block copolymer and ethylene copolymer. The use of talc in an amount more than 25 parts by weight will provide a composition of insufficient flexural modulus, whereas the use of less than 7 parts by weight will result in a composition of low impact strength.

The talc may be used as such. With a view to improving its adhesion or dispersibility to or in the polymers, however, the talc may be treated with various organic titanate coupling agents, silane coupling agents, fatty acids, metal salts of fatty acids, fatty acid esters, etc.

The composition of the present invention should include a propylene homopolymer domain having an average lamella thickness of 8 nm or more, preferably 9 nm or more, as observed under an electron microscope along the normal direction of the (100) or (010) plane. When the lamella thickness is less than 8 nm, the solidification rate by cooling of the composition is so slow that the cooling time on injection molding must be extended so as to obtain moldings of excellent surface smoothness, whereby the production speed of moldings is considerably lowered.

From the viewpoint of good coating properties of molded products, the amorphous moiety in the composition should preferably constitute 50% by weight or more of all the resin components. Thus, the thermoplastic polymer component constituted by the ethylene propylene block copolymer and the ethylene copolymer should preferably have a crystallinity of 50% or less, as measured by pulsed NMR.

The composition of the present invention may contain, in addition to the components mentioned above, other additional components on condition that they have no appreciable adverse influence on the advantages of the invention.

The other additional components may include additives conventionally employed in thermoplastic polymer compositions such as processing stabilizers, antioxidants, ultraviolet absorbers, light stabilizers, various soaps inclusive of metal soaps, antistatic agents, lubricants, nucleating agents, pigments and pigment dispersants. Besides, whiskers such as potassium titanate, magnesium oxysulfate and aluminum borate, all in a fibrous form and carbon fibers, which are all known to impart higher flexural modulus to thermoplastic polymer compositions than would be possible with talc, may be incorporated in the composition of the invention, if required.

The composition of the present invention may be prepared by kneading the above components with an ordinary extruder, a Banbury mixer, rolls, Brabender, a kneader or like other equipment. However, preference is given to using a twin-screw extruder.

Any known molding technique such as injection molding, extrusion molding and blow molding may be applicable to the composition of the present invention to prepare molded products. In view of the properties of the composition, however, injection molding is most advantageously employed.

The present invention will now be explained in more detail with reference to the following examples, which are given merely for illustrating the invention and are not intended to be limiting thereof.

Measuring methods used in the examples are as follows:

(1) MFR: Measured at 230°C under a load of 2.16 Kg according to ASTM-D1238.

(2) Isotactic Pentad Fraction (P):

The fraction of five propylene monomer units that are continuously bonded in an isotactic manner was measured by $^{13}$C-NMR and determined by 25,000 cumulative measurements with an improved limit of detection. Assignment of the spectral peak was determined according to the teachings in "Macromolecule", 8, 687 (1975).

(3) Lamella Thickness

Small blocks were cut out of a sample obtained by the injection molding of the composition under test at a 1-mm interval in the thickness direction (In case of a 4-mm thick sample, for example, small blocks are cut out at three locations spaced 1-mm, 2-mm and 3-mm away from one side). The blocks were treated with an $RuO_4$ reagent so that the amorphous portions of the blocks can look black upon observation under electron microscope, since the $RuO_4$ reagent penetrates only into the amorphous portions (for details thereof, see "Polymer", 27, 1497 (1986)). Then, very thin films were cut out of the block in three directions, one parallel with the injection direction and the other two normal thereto. After that, the films were observed under a transmission type electron, microscope (JEM-100CX manufactured by JEOL, Ltd.) in terms of what crystalline and amorphous states they were in. The lamella thickness along the normal direction of the (100) or (010) plane was measured at at least 100 points in each view direction on the microphotograph, and the measurements were statistically processed to find a number-average value that is the lamella thickness.

(4) Melting Point (Melting Temperature):

A 10-mg sample was set in a differential scanning calorimeter, Model 910 manufactured by Du Pont Corp. The sample was heated to +180°C, and then cooled at a constant rate of 10°C per minute to -100°C. Thereafter, the sample was heated again at a constant rate of 20°C per minute. A temperature corresponding to the peak of the thermogram obtained was determined as the melting point.

(5) Flexural Modulus: Measured at 23°C according to ASTM-D790.

(6) Impact Strength: Measured according to ASTM-D256 (Izod value at -30°C).

(7) Surface Hardness: Evaluated by a Rockwell hardness at 23°C (Scale R), measured in accordance with ASTM-D785.

(8) Total Crystallinity of Resin: Determined by pulsed NMR (see Kobunshi Jikkengaku 18, "Magnetic Resonance of Polymers", pp. 143-144, published by Kyoritsu Shuppan K.K.).

(9) Surface Smoothness: Evaluated by visual observation of a coated automotive bumper (described later) in comparison with a sheet metal having the same coating.

○: Equal to coated sheet metal.

△: Slightly inferior to coated sheet metal, but acceptable for practical use.

×: Considerably inferior to coated sheet metal and unacceptable for practical use.

## Examples 1-5 & Comparative Examples 1-11

The materials shown in Table 1 were mixed in accordance with the formulation shown in Table 2. To the resulting mixtures, 0.1 part by weight of 2,6-di-t-butyl-p-phenol, 0.1 part by weight of tetrakis[methylene-3(3',5'-di-t-butyl-4'-hydroxyphenyl)propionate]methane and 0.5 part by weight of carbon black were added, and mixed in Super Mixer manufactured by Kawada Seisakusho K.K. for 5 minutes. The mixtures thus obtained were kneaded and granulated at 210°C by means of a twin-screw kneader FCM manufactured by Kobe Steel, Ltd. to give thermoplastic polymer compositions.

Injection-molded specimens of the thus obtained thermoplastic polymer compositions were respectively prepared using an injection molding machine with a clamp pressure of 100 ton at a molding temperature of 220°C. The properties of the specimens were evaluated in accordance with the above-described methods.

Furthermore, for evaluation of the appearance (surface smoothness) of molded products, automotive bumpers (weight: 5 kg) were prepared using an injection molding machine with a clamp pressure of 4,000 ton at a molding temperature of 220°C. On the bumpers thus obtained, coating was conducted in the following manner:

a. The bumper was exposed to the vapor of boiling 1,1,1-trichloroethane for 60 seconds.

b. A chlorinated polypropylene primer for polypropylene, "R-117" manufactured by Nihon B-Chemical K.K., was then coated onto the bumper by means of spray coating to form a primer layer with a thickness of approximately 15 μm. The bumper was placed in an air oven adjusted to a temperature of 80°C for 10 minutes to bake the coating.

c. A melamine-acrylate coating, "R-330" manufactured by Nihon B-Chemical K.K., was then coated onto the bumper by means of spray coating to form a coating layer with a thickness of approximately 35 μm. The bumper was placed in an air oven at 120°C for 20 minutes to bake the coating.

For the coated bumpers thus prepared, evaluation of surface smoothness was made in the manner mentioned above.

The results are shown in Tables 1-3.

Table 1

| Components | Ethylene-Propylene Block Copolymer | Type | Propylene Homopolymer Moiety | | | Ethylene-Propylene Block Copolymer | |
|---|---|---|---|---|---|---|---|
| | | | MFR (g/10 min.) | Isotactic Pentad Fraction | Lamela Thickness (nm) | MFR (g/10 min.) | Ethylene Content (wt%) |
| | | PP-1 | 155 | 0.987 | 9.2 | 69 | 5.1 |
| | | PP-2 | 193 | 0.990 | 9.1 | 93 | 7.1 |
| | | PP-3 | 102 | 0.985 | 8.6 | 56 | 2.8 |
| | | PP-4 | 330 | 0.993 | 9.5 | 180 | 4.0 |
| | | PP-5 | 43 | 0.985 | 8.3 | 21 | 6.3 |
| | | PP-6 | 114 | 0.973 | 8.3 | 66 | 5.0 |

| | Ethylene Copolymer | Type | | MFR (g/10 min.) | Melting Point (°C) |
|---|---|---|---|---|---|
| | | PEX-1 | Ethylene-Butene Copolymer | 1.0 | 66 |
| | | PEX-2 | Ethylene-Butene Copolymer | 0.6 | 78 |
| | | PEX-3 | Ethylene-Propylene Copolymer | 2.3 | 44 |
| | | PEX-4 | Ethylene-Butene Copolymer | 1.5 | 105 |
| | | PEX-5 | Ethylene-Propylene Copolymer | 0.8 | 22 |

| | Talc | Type | Average Particle Size (μm) | Specific Surface Area (m²/g) |
|---|---|---|---|---|
| | | Talc-1 | 3.1 | 4.2 |
| | | Talc-2 | 6.5 | 2.8 |

EP 0 557 124 A1

Table 2

| | Formulation | | | |
|---|---|---|---|---|
| | PP (parts by weight) | PEX (parts by weight) | | Talc (parts by weight) |
| Example 1 | PP-1 65 | PEX-1 35 | | Talc-1 15 |
| Example 2 | PP-2 65 | PEX-1 35 | | Talc-1 20 |
| Example 3 | PP-3 65 | PEX-1 35 | | Talc-1 10 |
| Example 4 | PP-1 70 | PEX-2 30 | | Talc-1 15 |
| Example 5 | PP-1 60 | PEX-3 40 | | Talc-1 15 |
| Example 6 | PP-1 65 | PEX-2 20 | PEX-3 15 | Talc-1 15 |
| Comp.Ex. 1 | PP-4 65 | PEX-1 35 | | Talc-1 20 |
| Comp.Ex. 2 | PP-5 65 | PEX-1 35 | | Talc-1 10 |
| Comp.Ex. 3 | PP-6 65 | PEX-1 35 | | Talc-1 10 |
| Comp.Ex. 4 | PP-7 65 | PEX-1 35 | | Talc-1 15 |
| Comp.Ex. 5 | PP-1 70 | PEX-4 30 | | Talc-1 15 |
| Comp.Ex. 6 | PP-1 60 | PEX-5 40 | | Talc-1 15 |
| Comp.Ex. 7 | PP-1 65 | PEX-1 35 | | Talc-2 15 |
| Comp.Ex. 8 | PP-1 80 | PEX-2 20 | | Talc-1 15 |
| Comp.Ex. 9 | PP-1 50 | PEX-3 50 | | Talc-1 15 |
| Comp.Ex. 10 | PP-2 65 | PEX-1 35 | | Talc-1 30 |
| Comp.Ex. 11 | PP-3 65 | PEX-1 35 | | Talc-1 5 |

EP 0 557 124 A1

Table 3

| | MFR (g/10 min.) | Flexural Modulus (kg/cm$^2$) | Impact Strength (IZOD: -30°C) (kg·cm/cm$^2$) | Surface Hardness (Rockwell Hardness: R-Scale) | Surface Smoothness (-) |
|---|---|---|---|---|---|
| Example 1 | 19 | 15,300 | 7.0 | 61 | ○ |
| Example 2 | 22 | 19,300 | 5.9 | 63 | ○ |
| Example 3 | 17 | 11,200 | 7.4 | 57 | ○ |
| Example 4 | 20 | 16,900 | 5.5 | 70 | ○ |
| Example 5 | 21 | 11,800 | 9.2 | 52 | ○ |
| Example 6 | 18 | 15,000 | 6.8 | 60 | ○ |
| Comp. Ex. 1 | 30 | 20,200 | 4.1 | 64 | ○ |
| Comp. Ex. 2 | 8 | 10,500 | 9.2 | 54 | △ |
| Comp. Ex. 3 | 16 | 9,200 | 7.8 | 51 | △ |
| Comp. Ex. 4 | 20 | 11,200 | 8.0 | 53 | × |
| Comp. Ex. 5 | 21 | 18,400 | 4.1 | 80 | ○ |
| Comp. Ex. 6 | 19 | 10,600 | 10.5 | 32 | × |
| Comp. Ex. 7 | 20 | 13,000 | 4.5 | 59 | ○ |
| Comp. Ex. 8 | 33 | 22,700 | 3.3 | 82 | ○ |
| Comp. Ex. 9 | 12 | 8,400 | 12.0 | 29 | △ |
| Comp. Ex. 10 | 15 | 25,000 | 3.9 | 63 | ○ |
| Comp. Ex. 11 | 25 | 9,200 | 8.2 | 60 | ○ |

EP 0 557 124 A1

**Claims**

1. A thermoplastic polymer composition comprising:

    (i) 100 parts by weight of a thermoplastic polymer component consisting of 55 to 75% by weight of an ethylene-propylene block copolymer having a melt flow rate of 30 to 150 g/10 min (as measured at 230°C under a load of 2.16 Kg), including a propylene homopolymer moiety having a melt flow rate of 50 to 300 g/10 min and an isotactic pentad fraction (P) of 0.98 or higher and 25 to 45% by weight of an ethylene copolymer having a melting point of 30 to 100°C, and

    (ii) 1 to 25 parts by weight of talc having an average particle size of 5 μm or less and a specific surface area of 3.5 m$^2$/g or larger,

    said composition including a propylene homopolymer domain having an average lamella thickness of 8 nm or more, as observed under an electron microscope along the normal direction of the plane (100) or (010).

2. The composition according to claim 1, wherein the ethylene-propylene block copolymer is grafted with maleic anhydride or trimethoxyvinylsilane.

3. The composition according to claim 1 or 2, wherein the ethylene copolymer is an ethylene-propylene copolymer or an ethylene-butene copolymer or a mixture thereof.

4. The composition according to any one of the preceding claims having a crystallinity of 50% or less, as measured by pulsed NMR.

5. The composition according to any one of the preceding claims having a flexural modulus of 10,000 to 20,000 Kg/cm$^2$.

**European Patent Office**

# EUROPEAN SEARCH REPORT

Application Number

EP 93 30 1237

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | US-A-4 983 647 (UENO ET AL.) <br> * the whole document * <br> --- | 1-5 | C08L53/00 <br> C08L51/06 <br> //(C08L53/00, <br> 23:08) |
| D,Y | DATABASE WPIL <br> Section Ch, Week 8545, 25 September 1985 <br> Derwent Publications Ltd., London, GB; <br> Class A17, AN 85-279273 <br> & JP-A-60 188 453 (MITSUBISHI <br> PETROCHEMICAL KK) <br> * abstract * <br> --- | 1-5 | |
| X | EP-A-0 462 680 (MITSUI PETROCHEMICAL <br> INDUSTRIES, LTD) <br> * page 2, line 1 - page 4, line 46 * <br> * claim 1 * <br> --- | 1-5 | |
| X | GB-A-2 246 358 (NISSAN MOTOR COMPANY <br> LIMITED) <br> * page 2, line 13 - page 3, line 32 * <br> * page 4, line 25 - page 9, line 2 * <br> * claims * <br> --- | 1,3-5 | |
| X | EP-A-0 411 627 (HIMONT INCORPORATED) <br> * page 2, line 34 - line 44; claims * <br> --- | 1,3,4 | TECHNICAL FIELDS SEARCHED (Int. Cl.5) <br><br> C08L <br> C08F |
| X | EP-A-0 433 990 (HOECHST <br> AKTIENGESELLSCHAFT) <br> * page 2; claims * <br> --- | 1,3,4 | |
| P,X | EP-A-0 519 725 (MITSUBISHI PETROCHEMICAL <br> CO.,LTD.) <br> * the whole document * <br><br> ----- | 1-5 | |

The present search report has been drawn up for all claims

| Place of search | Date of completion of the search | Examiner |
|---|---|---|
| THE HAGUE | 13 MAY 1993 | KAUMANN E.K-H. |